# EUROPÄISCHE PATENTSCHRIFT

(11) **EP 1 396 395 B1**
(45) Veröffentlichungstag und Bekanntmachung des Hinweises auf die Patenterteilung: **19.07.2006**
(21) Anmeldenummer: 03016574.0
(22) Anmeldetag: 25.07.2003
(51) Int. Cl.: B60R 21/26

(54) **Gasgenerator**
Gas generator
Générateur de gaz

(30) Priorität: 03.09.2002 DE 10240639
(43) Veröffentlichungstag der Anmeldung: 10.03.2004
(73) Patentinhaber: TRW Airbag Systems GmbH, 84544 Aschau am Inn (DE)
(72) Erfinder: Bierwirth, Sebastian, Dr., 83562 Rechtmehring (DE); Schwuchow, Karsten, 83512 Wasserburg (DE); Ruckdeschel, Rolf, 87645 Schwangau (DE)
(74) Vertreter: Kitzhofer, Thomas

(56) Entgegenhaltungen:
- EP-A- 0 745 518
- EP-A- 1 205 363
- DE-A- 19 728 438
- US-A- 5 772 243
- US-A1- 2001 020 778

## Beschreibung

Die Erfindung betrifft einen Gasgenerator gemäß dem Oberbegriff des Anspruch 1.

Aus der gattungsbildenden DE 197 28 438 A1 ist ein Rohrgasgenerator mit einem länglichen Außengehäuse, wenigstens einer darin vorgesehenen, mit einem Festtreibstoff gefüllten Brennkammer mit axial angeordneter Befüllöffnung und wenigstens einer Zündereinheit zum Anzünden des Festtreibstoffs bekannt. Die Zündereinheit hat einen darin integrierten Zünder und ist axial zum Außengehäuse angeordnet, wobei sie, je nach Volumen der zugehörigen Brennkammer, unterschiedlich tief in die Brennkammer hineinragt.

Die US 2001/0020778 A1 offenbart einen länglichen Gasgenerator mit einer Zündereinheit, die radial tief in die Brennkammer hineinragt, um ein rasches und gleichmäßiges Zünden des Treibstoffs von innen zu gewährleisten.

Längliche Gasgeneratoren, auch Rohrgasgeneratoren genannt, haben üblicherweise eine axiale Länge, die den Durchmesser des Außengehäuses deutlich übersteigt. Die Länge beträgt meist mehr als das Doppelte des Durchmessers. Die Gasgeneratoren sollen ein schnelles, großflächiges Anzünden des Treibstoffs ermöglichen. Ein mögliches Problem bei der Durchströmung des Festtreibstoffs durch bereits erzeugtes Gas ist die Erosion auf der Oberfläche des Treibstoffs, die zu einer schwerer kalkulierbaren Leistungsentfaltung führen kann. Ziel ist es also, eine "sanfte" Anzündung des Treibstoffs zu erreichen und eine starke Erosion des Treibstoffs zu vermeiden, womit hohe Druckspitzen in der Brennkammer vermieden und gleichzeitig der zur Verbrennung nötige Mindestdruck in der Brennkammer über die gesamte Brenndauer auf einem gewissen Niveau gehalten werden kann. Darüber hinaus soll eine leichte Befüllbarkeit der Brennkammer mit Festtreibstoff erreicht werden.

Die oben genannten Vorteile werden bei einem gattungsgemäßen Gasgenerator dadurch erreicht, daß die Zündereinheit 50 so radial anßen am Außengehäuse angeordnet ist, daß sie nicht in die Brennkammer ragt und eine, bezogen auf das Außengehäuse, radiale Überzündöffnung im Außengehäuse vorgesehen ist, so daß in der Zündereinheit erzeugtes Anzündgas über die Überzündöffnung in das Innere des Außengehäuses strömt. Beim erfindungsgemäßen Gasgenerator ragt die Zündereinheit also nicht axial in die Brennkammer, sondern die Zündereinheit ist außerhalb des Außengehäuses angeordnet, so daß das sogenannte Anzündgas aus der Zündereinheit über die radiale Überzündöffnung in das Innere des Außengehäuses und damit in die Brennkammer gelangen kann. Durch diese sogenannte seitliche Anzündung kann einerseits eine größere Anzündfläche zur Verfügung gestellt werden, und andererseits ragt die Zündereinheit nicht mehr tief in die Brennkammer hinein, was den Befüllvorgang der Brennkammer mit Festtreibstoff über die axial angeordnete Befüllöffnung erleichtert und für eine bessere Lagefixierung bei Verwendung von Treibstofftabletten sorgt. Ferner sind radiale Ausströmöffnungen im Außengehäuse vorgesehen, so daß das Treibstoffbett nicht, wie im Stand der Technik in axialer Richtung und damit in seiner größten Erstreckung, sondern radial auf kürzerem Weg durchströmt wird, was die Erosion des Treibstoffs reduziert.

Die Brennkammer sollte möglichst ohne Hinterschnitt ausgeführt sein, wie bereits erwähnt z.B. zylindrisch sein, um ein vollständiges und einfaches Befüllen zu ermöglichen. Bei einer zylindrischen Ausführung der Brennkammer sollte die Längsachse der Brennkammer zur Mittelachse des Außengehäuses parallel verlaufen, um eine kompakte Konstruktion zu erzielen.

Die sogenannten Anzündgase, also das Gemisch aus Partikel und Gas, welches von der Zündereinheit produziert wird, kann noch besser verteilt in die Brennkammer gelangen, wenn zwischen der Innenseite des Außengehäuses und der Brennkammerwand ein Verteilraum für das produzierte Anzündgas geschaffen wird. In den Verteilraum mündet auch die Überzündöffnung. Der Verteilraum erstreckt sich vorzugsweise über die gesamte axiale Länge der Brennkammer, so daß das Gas aus der Zündereinheit sich längs des vorzugsweise langgestreckten Verteilraums auf der gesamten axialen Länge ausbreitet und von dort aus sehr großflächig in die Brennkammer gelangt, was zu einer sogenannten "sanften" Anzündung des Festtreibstoffs führt.

Gemäß der bevorzugten Ausführungsform ist zwischen der Brennkammer und Ausströmöffnungen am Außengehäuse ein Expansionsraum für Gas angeordnet, der sich ebenfalls über die gesamte axiale Länge der Brennkammer erstrecken kann.

Der Verteilraum bzw. der Expansionsraum kann dadurch gebildet werden, daß die als Einsatz ausgeführte Brennkammerwand wenigstens eine radial einwärts gerichtete Einbuchtung hat, die wie gesagt vorzugsweise über die gesamte Länge der Brennkammer verläuft.

Bis auf den Verteil- bzw. den Expansionsraum kann der Einsatz vollflächig an der Innenseite des Außengehäuses anliegen und damit lagesicher positioniert sein.

Der Einsatz kann als einlagiges Filter ausgeführt sein oder als Lochblech, was es ermöglicht, auf einen dicken Filtereinsatz im gesamten Gasgenerator zu verzichten.

Eine bevorzugte Ausführungsform sieht vor, daß die Ausströmöffnungen in einem diametral der Überzündöffnung gegenüberliegenden Bereich angeordnet sind, d.h. auf einer Seite erfolgt die Einleitung der Anzündgase, die zuerst axial verteilt werden, um dann das Treibstoffbett zu durchdringen, und auf der gegenüberliegenden Seite kann das erzeugte Gas erst aus dem Gasgenerator ausströmen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch eine erste Ausführungsform des erfindungsgemäßen Gasgenerators,
- Figur 2 eine Querschnittsansicht längs der Linie II-II in Figur 1,
- Figur 3 eine Längsschnittansicht durch einen erfindungsgemäßen Gasgenerator gemäß einer zweiten Ausführungsform längs der Linie III-III in Figur 4,
- Figur 4 eine Querschnittsansicht durch den Gasgenerator längs der Linie IV-IV in Figur 3,
- Figur 5 eine Längsschnittansicht durch den erfindungsgemäßen Gasgenerator gemäß einer dritten Ausführungsform,
- Figur 6 eine Querschnittsansicht durch den Gasgenerator längs der Linie VI-VI in Figur 5 und
- Figur 7 eine Querschnittsansicht durch den erfindungsgemäßen Gasgenerator gemäß einer weiteren Ausführungsform.

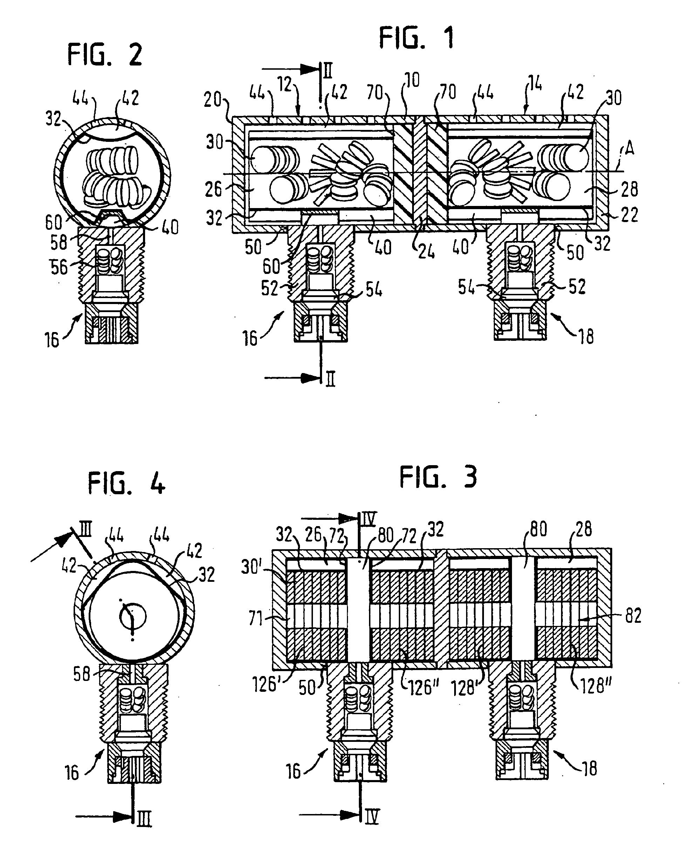

In Figur 1 ist ein länglicher Rohrgasgenerator dargestellt, der ein zylindrisches Außengehäuse 10 aufweist. Der Rohrgasgenerator besteht aus zwei Stufen 12, 14, die unabhängig voneinander aktiviert werden können und zugeordnete Zündereinheiten 16, 18 besitzen. Das Außengehäuse 10 des Gasgenerators setzt sich zusammen aus zwei einseitig geschlossenen zylindrischen Rohren 20, 22, die über eine Zwischenwand 24 miteinander verbunden sind. Im Inneren des Außengehäuses 10 ist für jede Stufe eine eigene zylindrische und langgestreckte Brennkammer 26, 28 vorgesehen, die mit Festtreibstoff 30 in Tablettenform zur Bildung eines Treibstoffbetts gefüllt ist. Die Brennkammern 26, 28 werden durch eine Brennkammerwand 32 in Form eines beidseitig offenen, zylindrischen, umfangsmäßig geschlossenen Siebkörpereinsatzes gebildet. Dieser Siebkörper liegt auf der Innenseite des Außengehäuses 12 vollflächig an, hat jedoch zwei über seine gesamte axiale Länge sich erstreckende radial einwärts gerichtete Einbuchtungen, die in diametral zur Mittelachse A des Außengehäuses 10 gegenüberliegenden Bereichen liegen. Diese Einbuchtungen begrenzen zusammen mit der Innenseite des Außengehäuses 10 sich über die gesamte axiale Länge jeder Brennkammer 26, 28 erstreckende Räume, nämlich einen Verteilraum 40 sowie einen Expansionsraum 42, der im Bereich von Ausströmöffnungen 44 im Außengehäuse 10 angeordnet ist. Diametral gegenüberliegend der Ausströmöffnung 44 ist für jede Zündereinheit 16, 18 im Außengehäuse 10 eine Überzündöffnung 50 vorgesehen. Diese ist radial zur Mittelachse A ausgerichtet.

Jede Zündereinheit 16, 18 besteht aus einem topfförmigen Gehäuse 52, das seitlich von außen auf das Außengehäuse 10 aufgesetzt ist. In dem Gehäuse 52 sind ein Zünder 54 und eine Verstärkerladung 56 angeordnet. Eine radial zur Mittelachse A verlaufende stirnseitige Überzündöffnung 58 erlaubt das Ausströmen von sogenannten Anzündgasen, also den Verbrennungsprodukten (Gas und Partikel) beim Aktivieren des Zünders 54 und Verbrennen der Verstärkerladung 56.

Im Bereich der Überzündöffnung 58 ist, anliegend an die Brennkammerwand 32 ein axial kurzes, bogenförmiges Prallblech 60, welches keine Öffnungen hat, angeordnet.

Bezüglich der Zündereinheiten 16, 18 ist zu betonen, daß diese nur an der Außenseite des Außengehäuse 10 anliegen können oder, wie in Figur 1 dargestellt, auch teilweise in die Überzündöffnung 50 hineinragen können.

In jedem Fall jedoch ragen die Zündereinheiten 16, 18 nicht in die Brennkammern 26, 28.

Zur Brennkammerbefüllung sind die beiden Rohre 20, 22 noch nicht miteinander verbunden, so daß sie jeweils eine axiale Befüllöffnung (offenes Ende) besitzen. Da die Brennkammern 26, 28 ohne Hinterschnitte ausgeführt sind, lassen sie sich vollständig und sehr einfach axial mit Festtreibstoff 30 befüllen. Anschließend wird jeweils eine elastische Füllscheibe 70 eingebracht, bevor beide Rohre 20, 22 an der Zwischenwand 24 befestigt werden.

Die Funktionsweise des dargestellten Gasgenerators wird im folgenden erläutert. Wenn einer der Zünder 54 aktiviert wird, kommt es zu einem Verbrennen der Verstärkerladung 56, und heißes Anzündgas gelangt über die Überzündöffnung 58 aus dem Gehäuse 52 und strömt radial in das Außengehäuse 10 heraus. Die Überzündöffnung 50 erlaubt den Einlaß der Abströmgase in das Innere des Außengehäuses 10. Das Gas trifft unmittelbar auf das Prallblech 60 und wird axial um 90° umgelenkt, verteilt sich also auf der gesamten Länge im Verteilraum 40 und gelangt schließlich in die entsprechende Brennkammer 26, 28. Der Festtreibstoff 30 wird großflächig gezündet, und die entstehenden Gase können die Brennkammer großflächig in Richtung Expansionsraum 42 und schließlich über die Ausströmöffnungen 44 das Außengehäuse 10 wieder verlassen.

Hohe Spitzendrücke in den Brennkammern 26, 28 werden vermieden, es erfolgt eine sanfte Anzündung des Treibstoffs, wobei über die gesamte Brenndauer der notwendige Mindestdruck auf einem gewissen Niveau gehalten werden kann.

Die Ausführungsform nach den Figuren 3 und 4 entspricht zum Teil der nach den Figuren 1 und 2, so daß für funktionsgleiche Teile die bereits eingeführten Bezugszeichen verwendet werden und nur noch auf die bestehenden Unterschiede eingegangen werden muß.

Der Festtreibstoff 30' ist in Scheibenform ausgeführt, mit einer zentralen Öffnung. Die zur Mittelachse unsymmetrischen Scheiben sind aufeinandergestapelt und können zur gegenseitigen Beabstandung stirnseitig kleine Fortsätze oder Noppen besitzen. Jede Brennkammer 26, 28 hat zwei Stapel von Festtreibstoffscheiben 30', die im Bereich der Öffnung 58 zum zentralen Eintritt von Gas beispielsweise mittels zweier Blechscheiben 72 voneinander beabstandet sind. Die Blechscheiben 72 haben im Bereich der Löcher 70 Öffnungen. Man könnte also sagen, jede Brennkammer 26, 28 ist bei der Ausführungsform nach Figur 3 in zwei kleinere Brennkammern 126', 126" und 128' und 128" unterteilt.

Für jeden Stapel von Festtreibstoffscheiben 30' ist im übrigen ein eigener zylindrischer Siebkörper, der die Brennkammerwand 32 bildet, vorgesehen.

Wie Figur 4 zu entnehmen ist, gibt es zwei umfangsmäßig beabstandete Reihen von Ausströmöffnungen 44 im Außengehäuse 10. Die Brennkammerwand 32 hat zwei Einbuchtungen, die jeweils einer Reihe von Ausströmöffnungen 44 zugeordnet sind, so daß zwei Expansionsräume 42, im Querschnitt ersichtlich, entstehen. Die Expansionsräume 42 erstrecken sich über die gesamte Länge jedes Pakets von Festtreibstofftabletten 30' und damit über eine zugeordnete abgeteilte, separate Brennkammer 126', 126", 128', 128".

Bei dieser Ausführungsform strömt das in der Zündereinheit 16, 18 erzeugte Gas über die Überzündöffnung 58 aus der entsprechenden Zündereinheit 16, 18 und radial ins Außengehäuse 10. Die Überzündöffnung 50 erlaubt den Eintritt des Anzündgases in das Innere des Außengehäuses 10. Das Gas gelangt in einen Zwischenraum 80 und in einen zentrischen Kanal 82, der durch die Öffnungen 70 in den Festtreibstoffscheiben 30' gebildet ist, so daß der Festtreibstoff 30' radial von innen gezündet wird. Das erzeugte heiße Gas gelangt in die Expansionskammern 42, von wo aus es das Außengehäuse 10 über die Ausströmöffnungen 44 verläßt.

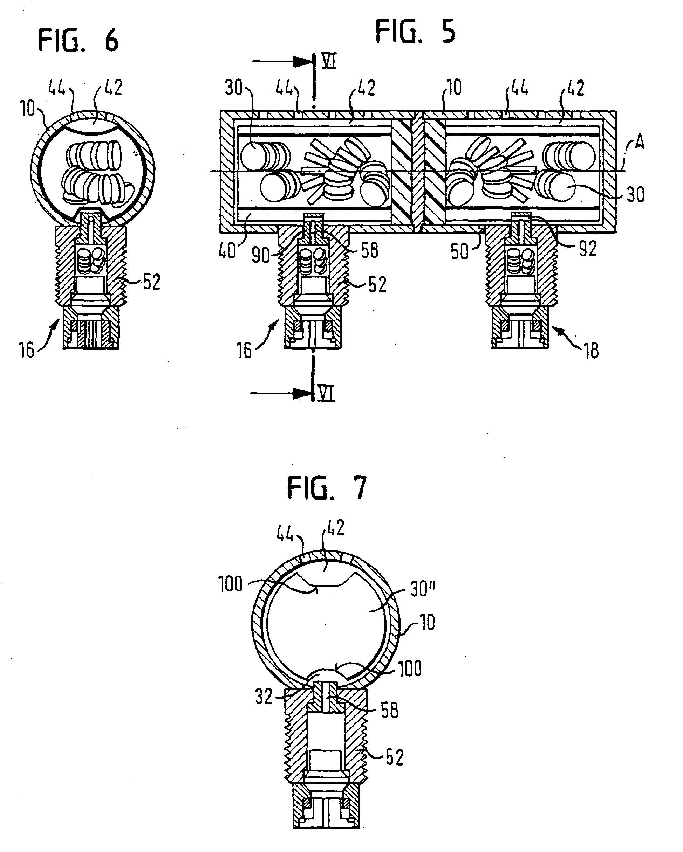

Die Ausführungsform nach den Figuren 5 und 6 entspricht im wesentlichen der in Figur 1 und 2 gezeigten. Hier ist jedoch das Prallblech 60 weggelassen. Anstatt dessen ragt aus dem Gehäuse 52 noch ein düsenförmiger Fortsatz 90 in den Verteilraum 40. Der düsenförmige Fortsatz 90 hat eine radiale Überzündöffnung 58, die als Sackloch ausgeführt ist. Dieses Sackloch trifft auf ein senkrecht hierzu verlaufendes Durchgangsloch 92, das parallel zur Achse A ausgerichtet ist.

Das in der Anzündeinheit 16, 18 erzeugte Gas wird im düsenförmigen Fortsatz 90 um 90° umgelenkt und verläßt diesen in zwei Strömungen, die parallel zur Achse A verlaufen in Richtung Verteilraum 40, von wo aus es großflächig den Festtreibstoff 30 entzündet. Das erzeugte Gas gelangt schließlich in den Expansionsraum und verläßt das Außengehäuse 10 über die Ausströmöffnungen 44.

Bei den gezeigten Ausführungsformen führen die Überzündöffnungen 58 im Gehäuse 52 das Anzündgas in das Außengehäuse 10. Wenn jedoch das Gehäuse 52 nicht abschnittsweise durch die Überzündöffnung 50 ragt, führt auch die Überzündöffnung 50 Anzündgas in das Innere des Außengehäuses 10.

Die Ausführungsform nach Figur 7 entspricht im wesentlichen der in Figur 4 gezeigten, wobei das die Brennkammerwand 32 definierende Sieb weggelassen ist. Zur Schaffung eines Verteilraums 40 und eines Expansionsraums 42 haben die Festtreibstoffscheiben 30" Abflachungen oder Einbuchtungen 100.

## Patentansprüche

1. Gasgenerator, mit einem länglichen, rohrförmigen Außengehäuse (10),
wenigstens einer darin vorgesehenen Brennkammer (26, 28), die mit einem Festtreibstoff (30; 30') gefüllt ist und eine axial angeordnete Befüllöffnung hat, und
wenigstens einer Zündereinheit (16, 18) zum Anzünden des Festtreibstoffs (30; 30'), mit einem darin integrierten Zünder (54),
**dadurch gekennzeichnet, daß** die Zündereinheit (16, 18) so radial außen am Außengehäuse (10) angeordnet ist, daß sie nicht in die Brennkammer (26, 28) ragt und eine, bezogen auf das Außengehäuse (10), radiale Überzündöffnung (50, 58) im Außengehäuse vorgesehen ist, so daß in der Zündereinheit (16, 18) erzeugtes Anzündgas über die Überzündöffnung (50; 58) in das Innere des Außengehäuses (10) strömt.

2. Gasgenerator nach Anspruch 1, **dadurch gekennzeichnet, daß** in der Zündereinheit (16) im Bereich ihrer Befestigung am Außengehäuse eine Überzündöffnung (58) vorgesehen ist.

3. Gasgenerator nach einem der vorhergehenden Ansprüche, **dadurch gekennzeichnet, daß** die Brennkammer (26, 28) ohne Hinterschnitt ausgeführt ist.

4. Gasgenerator nach einem der vorhergehenden Ansprüche, **dadurch gekennzeichnet, daß** die Brennkammer (26, 28) zylindrisch ist und ihre Längsrichtung parallel zur Mittelachse (A) des Außengehäuses (10) verläuft.

5. Gasgenerator nach einem der vorhergehenden Ansprüche, **dadurch gekennzeichnet, daß** zwischen der Innenseite des Außengehäuses (10) und der Brennkammerwand (32) ein Verteilraum (40) für von der Zündereinheit (16, 18) produziertes Anzündgas vorgesehen ist, in den die Überzündöffnung (50, 58) mündet.

6. Gasgenerator nach Anspruch 5, **dadurch gekennzeichnet, daß** sich der Verteilraum (40) über die gesamte axiale Länge der Brennkammer (26) erstreckt.

7. Gasgenerator nach einem der vorhergehenden Ansprüche, **dadurch gekennzeichnet, daß** das Außengehäuse (10) Ausströmöffnungen (44) hat und zwischen der Brennkammer (26, 28) und den Ausströmöffnungen (44) ein Expansionsraum (42) für Gas vorgesehen ist.

8. Gasgenerator nach Anspruch 7, **dadurch gekennzeichnet, daß** sich der Expansionsraum (42) über die gesamte axiale Länge der Brennkammer (26, 28) erstreckt.

9. Gasgenerator nach einem der Ansprüche 5 bis 8, **dadurch gekennzeichnet, daß** die Brennkammerwand (32) durch einen Einsatz gebildet ist, der eine radial einwärts gerichtete Einbuchtung zur Erzeugung des Verteilraums (40) bzw. des Expansionsraums (42) hat.

10. Gasgenerator nach Anspruch 9, **dadurch gekennzeichnet, daß** der Einsatz bis auf den Verteil- bzw. Expansionsraum (40 bzw. 42) vollflächig an der Innenseite des Außengehäuses (10) anliegt.

11. Gasgenerator nach einem der vorhergehenden Ansprüche, **dadurch gekennzeichnet, daß** das Außengehäuse Ausströmöffnungen (44) hat, die in einem zur Mittelachse (A) des Außengehäuses (10) diametral der Überzündöffnung (50, 58) gegenüberliegenden Bereich angeordnet sind.

## Claims

1. A gas generator comprising an elongated, tubular outer housing (10),
at least one combustion chamber (26, 28) provided therein, which is filled with a solid propellant (30; 30') and has an axially arranged filling opening, and
at least one igniter unit (16, 18) for igniting the solid propellant (30; 30'), having an igniter (54) integrated therein,
**characterized in that** the igniter unit (16, 18) is arranged radially externally on the outer housing (10) such that it does not project into the combustion chamber (26, 28), and that an ignition transfer opening (50, 58) is provided in the outer housing in a radial relationship to the outer housing (10) so that ignition gas generated in the igniter unit (16, 18) flows into the interior of the outer housing (10) via the ignition transfer opening (50; 58).

2. The gas generator according to claim 1, **characterized in that** an ignition transfer opening (58) is provided in the igniter unit (16) in the region of its fastening to the outer housing.

3. The gas generator according to any of the preceding claims, **characterized in that** the combustion chamber (26, 28) is constructed without an undercut.

4. The gas generator according to any of the preceding claims, **characterized in that** the combustion chamber (26, 28) is cylindrical and its longitudinal direction runs parallel to the central axis (A) of the outer housing (10).

5. The gas generator according to any of the preceding claims, **characterized in that** between the inner face of the outer housing (10) and the combustion chamber wall (32) a distribution space (40) is provided for ignition gas produced by the igniter unit (16, 18), the ignition transfer opening (50, 58) opening into the distribution space (40).

6. The gas generator according to claim 5, **characterized in that** the distribution space (40) extends across the entire axial length of the combustion chamber (26).

7. The gas generator according to any of the preceding claims, **characterized in that** the outer housing (10) has outflow openings (44) and an expansion space (42) for gas is provided between the combustion chamber (26, 28) and the outflow openings (44).

8. The gas generator according to claim 7, **characterized in that** the expansion space (42) extends across the entire axial length of the combustion chamber (26, 28).

9. The gas generator according to any of claims 5 to 8, **characterized in that** the combustion chamber wall (32) is formed by an insert which has a radially inwardly directed indentation to produce the distribution space (40) or respectively the expansion space (42).

10. The gas generator according to claim 9, **characterized in that** except for the distribution space or the expansion space (40 or respectively 42), the insert lies with the entire surface against the inner face of the outer housing (10).

11. The gas generator according to any of the preceding claims, **characterized in that** the outer housing has outflow openings (44) which are arranged in a region lying diametrically opposite the ignition transfer opening (50, 58) relative to the central axis (A) of the outer housing (10).

## Revendications

1. Générateur de gaz comportant un boîtier extérieur (10) allongé en forme de tube,
au moins une chambre de combustion (26, 28) prévue dans celui-ci, laquelle est remplie d'un combustible solide (30 ; 30') et qui a une ouverture de remplissage agencée axialement, et
au moins une unité d'amorçage (16, 18) pour amorcer le combustible solide (30 ; 30'), comportant une amorce (54) intégrée dans celle-ci,
**caractérisé en ce que** l'unité d'amorçage (16, 18) est agencée radialement à l'extérieure sur le boîtier extérieur (10) de telle sorte qu'elle ne fait pas saillie dans la chambre de combustion (26, 28), et **en ce qu'**il est prévu dans le boîtier extérieur une ouverture de transfert d'amorçage (50, 548) en relation radiale avec le boîtier extérieur (10), de telle sorte que le gaz d'amorçage engendré dans l'unité d'amorçage s'écoule via l'ouverture de transfert d'amorçage (50 ; 58) jusqu'à l'intérieur du boîtier extérieur (10).

2. Générateur de gaz selon la revendication 1, **caractérisé en ce qu'**il est prévu une ouverture de transfert d'amorçage (58) dans l'unité d'amorçage (16), dans la région de sa fixation sur le boîtier extérieur.

3. Générateur de gaz selon l'une des revendications précédentes, **caractérisé en ce que** la chambre de combustion (26, 28) est réalisée sans contre-dépouille.

4. Générateur de gaz selon l'une des revendications précédentes, **caractérisé en ce que** la chambre de combustion (26, 28) est cylindrique et sa direction longitudinale s'étend parallèlement à l'axe médian (A) du boîtier extérieur (10).

5. Générateur de gaz selon l'une des revendications précédentes, **caractérisé en ce que** entre la face intérieure du boîtier extérieur (10) et la paroi de chambre de combustion (32) est prévu un espace de distribution (40) pour le gaz d'amorçage produit par l'unité d'amorçage (16, 18), dans lequel débouche l'ouverture de transfert d'amorçage (50, 58).

6. Générateur de gaz selon la revendication 5, **caractérisé en ce que** l'espace de distribution (40) s'étend sur toute la longueur axiale de la chambre de combustion 826).

7. Générateur de gaz selon l'une des revendications précédentes, **caractérisé en ce que** le boîtier extérieur (10) a des orifices d'échappement (44) et **en ce qu'**il est prévu entre la chambre de combustion (26, 28) et les orifices d'échappement (44) une chambre d'expansion (42) pour du gaz.

8. Générateur de gaz selon la revendication 7, **caractérisé en ce que** la chambre d'expansion (42) s'étend sur toute la longueur axiale de la chambre de combustion (26, 28).

9. Générateur de gaz selon l'une des revendications 5 à 8, **caractérisé en ce que** la paroi de chambre de combustion (32) est formée par un insert qui a un creux orienté radialement vers l'intérieur pour produire l'espace de distribution (40) ou la chambre d'expansion (42).

10. Générateur de gaz selon la revendication 9, **caractérisé en ce qu'**à l'exception de l'espace de distribution ou de la chambre d'expansion (40 ou 42, respectivement), l'insert est en appui sur toute la surface de la face intérieure du boîtier extérieur (10).

11. Générateur de gaz selon l'une des revendications précédentes, **caractérisé en ce que** le boîtier extérieur a des orifices d'échappement (44) qui sont agencés dans une région diamétralement opposée à l'ouverture de transfert d'amorçage (50, 58) par rapport à l'axe médian (A) du boîtier extérieur (10).
